# NEUE EUROPÄISCHE PATENTSCHRIFT

(11) **EP 1 514 036 B2**
(45) Veröffentlichungstag und Bekanntmachung des Hinweises auf die Entscheidung über den Einspruch: **26.12.2018**
(45) Hinweis auf die Patenterteilung: 27.12.2006
(21) Anmeldenummer: 03725185.7
(22) Anmeldetag: 10.05.2003
(51) Int. Cl.: F16D 13/58, F16D 13/71

(54) **KUPPLUNGSANORDNUNG**
COUPLING ARRANGEMENT
SYSTEME D'EMBRAYAGE

(30) Priorität: 19.06.2002 DE 10227266
(43) Veröffentlichungstag der Anmeldung: 16.03.2005
(73) Patentinhaber: ZF Friedrichshafen AG, 88046 Friedrichshafen (DE)
(72) Erfinder: ORLAMÜNDER, Andreas, 97422 Schweinfurt (DE); VOGT, Sebastian, 97616 Bad Neustadt (DE)
(74) Vertreter: Ruttensperger Lachnit Trossin Gomoll
(86) Internationale Anmeldenummer: PCT/EP2003/004897
(87) Internationale Veröffentlichungsnummer: WO 2004/001250

(56) Entgegenhaltungen:
- GB-A- 2 075 618
- GB-A- 2 184 199
- US-A- 4 601 376
- US-A- 4 632 235

## Beschreibung

### Technisches Gebiet

Die vorliegende Erfindung betrifft eine Kupplungsanordnung, umfassend wenigstens eine in Richtung auf eine Widerlageranordnung zu pressbare Anpressplatte sowie eine Einrückkraftübertragungshebelanordnung, welche zur Übertragung einer Einrückkraft auf die Anpressplatte beaufschlagbar ist und sich an einem Gehäuse abstützt und eine Einrückkraft in ein Einrückkraftübertragungselement einleitet.

Eine solche Kupplungsanordnung ist z.B aus EP 1 134 447 bekannt.

### Stand der Technik

Bei derartigen Kupplungsanordnungen, welche häufig auch als Doppelkupplungen ausgeführt sind, wird die zum Übertragen eines Drehmoments erforderliche Einrückkraft nicht wie allgemein bekannt durch einen beispielsweise als Membranfeder ausgebildeten Kraftspeicher bereitgestellt, sondern durch einen Einrückermechanismus, welcher beispielsweise im Bereich eines Nehmerzylinders die Einrückkraftübertragungshebelanordnung beaufschlagt, welche dann durch Abstützung innerhalb der Kupplungsanordnung eine Einrückkraft zu einer Anpressplatte weiterleitet. Dabei soll die Einrückkraftübertragungshebelanordnung möglichst keinen eigenen Beitrag zur Einrückkraft liefern, um durch entsprechende Ansteuerung des Einrückkrafterzeugungsmechanismus ein definiertes Kupplungsmoment einstellen zu können, das durch die Eigenkraft der Einrückkraftübertragungshebelanordnung im Wesentlichen nicht beeinträchtigt ist. Da jedoch die Einrückkraftübertragungshebelanordnung, ebenso wie auch andere Kupplungskomponenten, im Kupplungsbetrieb hohen Fliehkräften ausgesetzt ist, besteht grundsätzlich die Gefahr, dass durch Fliehkraftbeeinträchtigung auch eine Auswirkung auf die Drehmomentübertragungscharakteristik erzeugt wird.

### Aufgabe der Erfindung

Es ist die Aufgabe der vorliegenden Erfindung, bei einer Kupplungsanordnung Maßnahmen bereitzustellen, welche zum einen einen einfachen Aufbau der zur Kupplungsbetätigung wirksamen Organe ermöglichen, andererseits die Beeinträchtigung durch Fliehkraft bei Erzeugung einer Einrückkraft so weit als möglich ausschließen.

### Darstellung der Erfindung

Gemäß einem ersten Aspekt der vorliegenden Erfindung wird diese Aufgabe gelöst durch eine Kupplungsanordnung, umfassend wenigstens eine in Richtung auf eine Widerlageranordnung zu pressbare Anpressplatte sowie eine Einrückkraftübertragungshebelanordnung, welche zur Übertragung einer Einrückkraft auf die Anpressplatte beaufschlagbar ist und sich an einem Gehäuse abstützt und eine Einrückkraft in ein Einrückkraftübertragungselement einleitet.

Erfindungsgemäß ist dabei weiter vorgesehen, dass die Einrückkraftübertragunghebelanordnung mit dem Einrückkraftübertragungselement integral ausgebildet ist.

Zunächst erkennt man, dass bei dieser Ausgestaltungsform eine teilemäßige Verschmelzung dadurch erfolgt, dass die eine Einrückkraft auf ein Einrückkraftübertragungselement weiterleitende Einrückkraftübertragungshebelanordnung mit diesem Element integral, also einteilig, ausgebildet ist. Dies vereinfacht den Aufbau deutlich. Auf Grund der integralen Anbindung der Einrückkraftübertragungshebelanordnung an ein Einrückkraftübertragungselement wird gleichzeitig auch die unter Fliehkrafteinwirkung erfolgende Verkippung oder Verlagerung einzelner Hebelabschnitte derselben weitgehend vermieden, was beispielsweise bei Lagerung auf Schwenkachsen der Fall sein könnte.

Hier kann ein sehr stabiler, gleicherweise beispielsweise durch Umformen von Blechrohlingen sehr einfach realisierbarer Aufbau dadurch erlangt werden, dass das Einrückkraftübertragungselement topfartig ausgebildet ist und dass die Einrückkraftübertragungshebelanordnung in einem Bodenbereich des topfartigen Einrückkraftübertragungselements ausgebildet ist. Dabei ist es möglich, dass die Einrückkraftübertragungshebelanordnung eine Mehrzahl von in Umfangsrichtung um eine Drehachse aufeinander folgenden und sich von einem ringartigen Bereich des Einrückkraftübertragungselementes nach radial innen erstreckenden Hebelabschnitten umfasst.

Gemäß einem weiteren Aspekt der vorliegenden Erfindung wird die eingangs genannte Aufgabe gelöst durch eine Kupplungsanordnung, umfassend wenigstens eine in Richtung auf eine Widerlageranordnung zu pressbare Anpressplatte, wobei die Anpressplatte in einem Gehäuse angeordnet ist und mit diesem im Wesentlichen drehfest und bezüglich diesem in Richtung einer Drehachse verlagerbar gekoppelt ist, sowie eine Einrückkraftübertragungshebelanordnung, welche die Anpressplatte zur Übertragung einer Einrückkraft beaufschlagt und eine Reaktionskraft in das Gehäuse einleitet.

Bei dieser Ausgestaltungsform ist erfindungsgemäß weiter vorgesehen, dass die Einrückkraftübertragungshebelanordnung mit dem Gehäuse integral ausgebildet ist.

Auch bei dieser Ausgestaltungsform findet eine teilemäßige Verschmelzung dadurch statt, dass nunmehrdie zur Kraftweiterleitung in Richtung Anpressplatte dienende Einrückkraftübertragungshebelanordnung mit einem die Anpressplatte selbst aufnehmenden bzw. auch zumindest teilweise umgebenden Gehäuse verschmolzen wird. Daraus ergeben sich die gleichen Vorteile, wie vorangehend bereits geschildert.

Auch bei dieser Ausgestaltungsform kann vorgesehen sein, dass das Gehäuse topfartig ausgebildet ist und dass die Einrückkraftübertragungshebelanordnung in einem Bodenbereich des topfartigen Gehäuses ausgebildet ist, wobei vorteilhafterweise dann weiter vorgesehen sein kann, dass die Einrückkraftübertragungshebelanordnung eine Mehrzahl von in Umfangsrichtung aufeinander folgenden und sich von einem ringartigen Bereich des Gehäuses nach radial innen erstreckenden Hebelabschnitten umfasst.

Um insbesondere im Einsatz bei einer Doppelkupplungsanordnung das mit der bereits angesprochenen Einrückkraftübertragungshebelanordnung integral ausgebildete Gehäuse zur kraftmäßigen Abstützung weiterer Komponenten nutzen zu können, wird vorgeschlagen, dass mit dem Gehäuse ein topfartig ausgebildetes Abstützgehäuse vorzugsweise durch Presspasssitz verbunden ist, an welchem Abstützgehäuse eine weitere Einrückkraftübertragungshebelanordnung für eine weitere Anpressplatte reaktionskraftmäßig abgestützt ist.

Gemäß einem weiteren Aspekt der vorliegenden Erfindung wird die eingangs genannte Aufgabe gelöst durch eine Kupplungsanordnung gemäß Anspruch 8. Diese umfasst wenigstens eine in Richtung auf eine Widerlageranordnung zu pressbare Anpressplatte sowie eine Einrückkraftübertragungshebelanordnung, welche zur Übertragung einer Einrückkraft auf die Anpressplatte beaufschlagbar ist und sich an einem Gehäuse abstützt und eine Einrückkraft in ein Einrückkraftübertragungselement oder eine Anpressplatte einleitet.

Erfindungsgemäß ist dabei weiter vorgesehen, dass die Einrückkraftübertragungshebelanordnung ringartig ausgebildet ist und eine Mehrzahl von in Umfangsrichtung um eine Drehachse aufeinander folgenden und sich im Wesentlichen radial erstreckenden Hebelabschnitten umfasst, die in einem ringartigen Verbindungsbereich miteinander verbunden sind.

Durch das Zusammenfassen mehrerer Hebelabschnitte an einem ringartigen Bauteil und das Koppeln dieser Hebelabschnitte in einem Verbindungsbereich wird zum einen der Aufbau dadurch vereinfacht, dass nicht einzelne separate Hebelabschnitte in einer Kupplung angebracht werden müssen, und wird zum anderen durch die feste Kopplung der einzelnen Hebelabschnitte wiederum die durch Fliehkrafteinwirkung induzierte Einwirkung auf das Einkuppelverhalten deutlich gemindert.

Beispielsweise kann vorgesehen sein, dass das Einrückkraftübertragungselement in Umfangsrichtung aufeinander folgende und jeweils zwischen zwei Hebelabschnitte der Einrückkraftübertragungshebelanordnung eingreifende Kopplungsabschnitte aufweist und dass die Hebelabschnitte und die Kopplungsabschnitte durch ein ringartiges Kopplungselement zur Kraftübertragung gekoppelt sind.

Der Verbindungsbereich verbindet die Hebelabschnitte in ihrem radial mittleren Bereich.

Um bei der erfindungsgemäß eingeführten Reduzierung der Fliehkrafteinwirkung gleichwohl die einzelnen Hebelabschnitte kräftemäßig so weit als möglich voneinander entkoppeln zu können, wird vorgeschlagen, dass die Hebelabschnitte in einem dem Verbindungsbereich nahen Bereich Materialaussparungen aufweisen. Weiter kann vorgesehen sein, dass die Hebelabschnitte voneinander in Umfangsrichtung trennende Materialaussparungen in wenigstens einem radialen Bereich erweitert sind.

Da die einzelnen Hebelabschnitte vor allem auch bei in Nutzkraftfahrzeugen eingesetzten Kupplungsanordnungen vergleichsweise große Kräfte übertragen müssen, ist ferner vorgesehen, dass an wenigstens einem Hebelabschnitt eine sich näherungsweise in radialer Richtung erstreckende rippenartige Ausformung ausgebildet ist.

Die erfindungsgemäße Kupplungsanordnung kann beispielsweise derart ausgebildet sein, dass sie beidseits der Widerlageranordnung jeweils eine Anpressplatte umfasst, dass eine erste Einrückkraftübertragungshebelanordnung an einem Gehäuse abgestützt ist und eine erste der Anpressplatten in Richtung auf die Widerlageranordnung zu beaufschlagt und dass eine zweite Einrückkraftübertragungshebelanordnung eine Einrückkraft auf die zweite der Anpressplatten über wenigstens ein Einrückkraftübertragungselement überträgt.

Die vorliegende Erfindung wird nachfolgend mit Bezug auf die beiliegenden Zeichnungen anhand bevorzugter Ausgestaltungsformen detailliert beschrieben. Es zeigt:
Fig.1 eine Teil-Längsschnittansicht einer erfindungsgemäßen Kupplungsanordnung;
Fig. 2 eine Teil-Axialansicht der Kupplungsanordnung der Fig. 1 in Blickrichtung II;
Fig. 3 eine der Fig. 1 entsprechende Ansicht einer alternativen Ausgestaltungsform einer Kupplungsanordnung;
Fig. 4 eine Axialansicht eines bei der Kupplungsanordnung der Fig. 3 eingesetzten Gehäuseteils;
Fig. 5 eine weitere der Fig. 1 entsprechende Ansicht einer alternativen Ausgestaltungsform einer Kupplungsanordnung;
Fig. 6 eine Teil-Axialansicht einer bei der Kupplungsanordnung der Fig. 5 eingesetzten Einrückkraftübertragungshebelanordnung;
Fig. 7 eine weitere der Fig. 1 entsprechende Ansicht
   einer alternativen Ausgestaltungsform einer Kupplungsanordnung;
Fig. 8 eine Teil-Axialansicht einer bei der Kupplungsanordnung der Fig. 7 einsetzbaren Einrückkraftübertragungshebelanordnung;
Fig. 9 eine der Fig. 8 entsprechende Ansicht einer alternativen Ausgestaltungsart einer Einrückkraftübertragungshebelanord-nung;
Fig. 10 eine der Fig. 8 entsprechende Ansicht einer alternativen Ausgestaltungsart einer Einrückkraftübertragungshebelanord-nung;
Fig. 11 eine der Fig. 8 entsprechende Ansicht einer alternativen Ausgestaltungsart einer Einrückkraftübertragungshebelanord-nung;
Fig. 12 eine der Fig. 8 entsprechende Ansicht einer alternativen Ausgestaltungsart einer Einrückkraftübertragungshebelanord-nung.

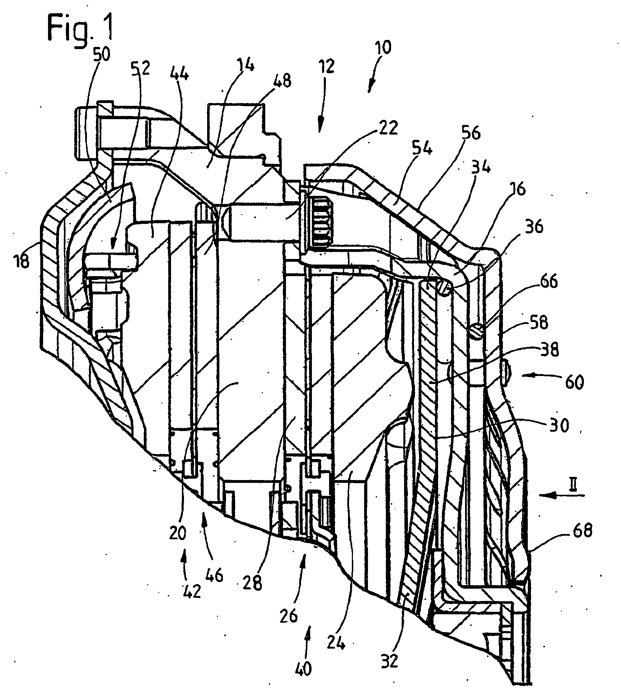

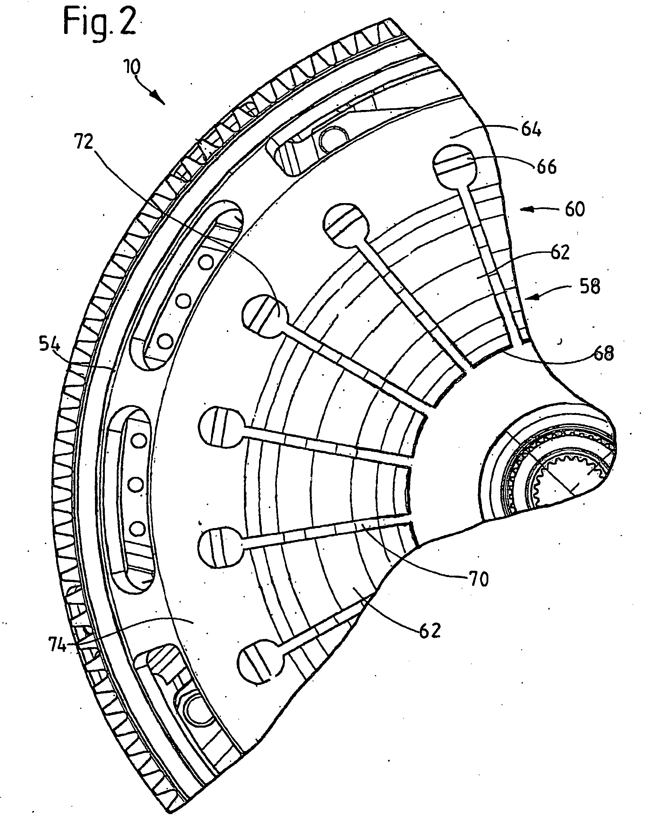

Eine erste Ausgestaltungsform einer in Form einer Doppelkupplung aufgebauten erfindungsgemäßen Kupplungsanordnung 10 ist in den Figuren 1 und 2 dargestellt. Diese Kupplungsanordnung 10 umfasst eine allgemein mit 12 bezeichnete Gehäuseanordnung, die wiederum zwei Gehäusebauteile 14, 16 umfasst. Das als Gussteil hergestellte Gehäusebauteil 14 ist in seinem radial äußeren, sich näherungsweise axial erstreckenden Bereich an ein Mitnahmeelement 18 angebunden, das wiederum an eine Antriebswelle, eine Schwungmasse, beispielsweise auch ein Zweimassenschwungrad, angekoppelt sein kann. Mit einem ringartigen Abschnitt 20 bildet das Gehäuseteil 14 eine Zwischenplatte. Das Gehäuseteil 16 ist vorzugsweise als Blechumformteil ausgebildet und ist in seinem radial äußeren Bereich mit dem Gehäuseteil 14 durch eine Mehrzahl von Schraubbolzen 22 fest verbunden.

In dem Gehäuseteil 16 ist eine erste Anpressplatte 24 derart angeordnet, dass sie beispielsweise über Tangentialblattfedern o. dgl. mit dem Gehäuseteil 16 im Wesentlichen drehfest gekoppelt ist, in Richtung einer Drehachse jedoch verlagerbar ist. Zwischen der Anpressplatte 24 und der Zwischenplatte 20 liegt eine erste Kupplungsscheibe 26 mit ihren Reibbelägen 28. Um die erste Anpressplatte 24 in Richtung auf die Zwischenplatte 20 zu vorzuspannen und dabei die Kupplungsscheibe 26 fest einzuklemmen, ist eine erste Einrückkraftübertragungshebelanordnung 30 vorgesehen. Ein möglicher konstruktiver Aufbau dieser Einrückkraftübertragungshebelanordnung wird nachfolgend mit Bezug auf andere Ausgestaltungsformen noch detailliert beschrieben. Hier sei so viel ausgeführt, dass diese Übertragungshebelanordnung eine Mehrzahl von in Umfangsrichtung aufeinander folgenden Hebelabschnitten 32 umfasst, die sich im dargestellten Beispiel in ihrem radial äußeren Endbereich 34 am Gehäuseteil 16 beispielsweise über einen Drahtring 36 abstützen, die in einem radial mittleren, d.h. weiter innen gelegenen Bereich 38 die Anpressplatte 24 beaufschlagen und die in einem radial inneren, in Fig. 1 nicht dargestellten Bereich durch einen Einrückkrafterzeugungsmechanismus beaufschlagt werden können, so dass sie, im Wesentlichen ohne einen eigenen wesentlichen Kraftbeitrag zu liefern, bei entsprechender Einrückkrafterzeugung mit ihrem radial mittleren Bereich 38 die Anpresslatte 24 beaufschlagen und sich dabei reaktionskraftmäßig am Gehäuseteil 16 abstützen.

Die Anpressplatte 24, die Kupplungsscheibe 26, die Zwischenplatte 20 und die erste Einrückkraftübertragungshebelanordnung 30 bilden zusammen im Wesentlichen einen ersten Kupplungsbereich 40 der Doppelkupplungsanordnung 10. Ein zweiter Kupplungsbereich 42 umfasst im Wesentlichen eine zweite Anpressplatte 44, die im Gehäuseteil 14 drehfest, bezüglich diesem jedoch axial verlagerbar getragen ist. Zwischen dieser zweiten Anpressplatte 44 und der Zwischenplatte 20 liegt eine zweite Kupplungsscheibe 46 mit ihren Reibbelägen 48. Ein ringartig ausgebildetes Einrückkraftübertragungselement beaufschlagt die Anpressplatte 44 beispielsweise über eine Verschleißnachstellvorrichtung 52. Dieses Einrückkraftübertragungselement 50 ist durch in der Fig. 1 nicht dargestellte beispielsweise als Zuganker ausgebildete Verbindungselemente gekoppelt mit einem weiteren Einrückkraftübertragungselement 54, das, ebenso wie das Gehäuseteil 16, vorzugsweise als Blechumformteil bereitgestellt ist und eine topfartige Konfiguration aufweist. Im Topfwandungsbereich 56 ist dieses Einrückkraftübertragungselement 50 dann durch die angesprochenen Verbindungselemente mit dem Einrückkraftübertragungselement 50 gekoppelt. Mit seinem Topfbodenbereich 58 bildet dieses Einrückkraftübertragungselement 54 gleichzeitig auch eine zweite Einrückkraftübertragungshebelanordnung 60. Auch diese umfasst, wie in Fig. 2 erkennbar, eine Mehrzahl von in Umfangsrichtung aufeinander folgenden Hebelabschnitten 62, die in einem radial äußeren ringartigen Bereich 64 des Bodenbereichs 58 miteinander verbunden sind. Die einzelnen Hebelabschnitte 62 stützen sich über einen Drahtring 66 am Gehäuseteil 16 ab, und zwar an der der Abstützung der ersten Einrückkraftübertragungshebelanordnung 30 entgegengesetzten Seite. In ihrem radial inneren Bereich 68 liegen die Hebelabschnitte 62 zur Beaufschlagung durch einen Einrückkrafterzeugungsmechanismus frei, so dass bei drückender Beaufschlagung, also Beaufschlagung in der Fig. 1 nach links in diesen radial inneren Bereichen, durch die Abstützung am Drahtring 66 die einzelnen Hebelabschnitte 62 mit ihrem radial äußeren integral an das Einrückkraftübertragungselement 54 anschließenden Bereich in der Darstellung der Fig. 1 axial nach rechts, also vom Gehäuseteil 16 weg bewegt werden. Über den Wandungsbereich 56 wird damit auch das Einrückkraftübertragungselement 50 in der Fig. 1 nach rechts bewegt, was wiederum bedeutet, dass dadurch die Anpressplatte 44 in Richtung auf die Zwischenplatte 20 zu beaufschlagt wird.

Man erkennt in Fig. 2 ferner, dass die einzelnen Hebelabschnitte 62 durch Aussparungsbereiche 70 voneinander getrennt sind, die in ihrem radial äußeren Bereich in erweiterten Abschnitten 72 enden. Es wird auf diese Art und Weise eine weitgehende kraftmäßige Entkopplung der einzelnen Hebelabschnitte 62 voneinander erreicht, so dass diese in ihrem Verbund nicht als Membranfeder o. dgl. wirksam sind, sondern bei Beaufschlagungen also keinen eigenen Kraftbeitrag bzw. Kraftwiderstand liefern.

Durch das Zusammenfassen der Einrückkraftübertragungshebelanordnung 60 mit dem Einrückkraftübertragungselement 54 wird eine Bauteileverschmelzung erlangt, die einen einfachen Aufbau der Kupplungsanordnung 10 mit sich bringt. Gleichzeitig wird durch die integrale Zusammenkopplung der einzelnen Hebelabschnitte 62 durch den einen ringartigen Verbindungsbereich 74 für diese bereitstellenden Bereich 64 des Einrückkraftübertragungselements 54 eine Fliehkrafteinwirkung auf die Hebelcharakteristik weitestgehend ausgeschaltet.

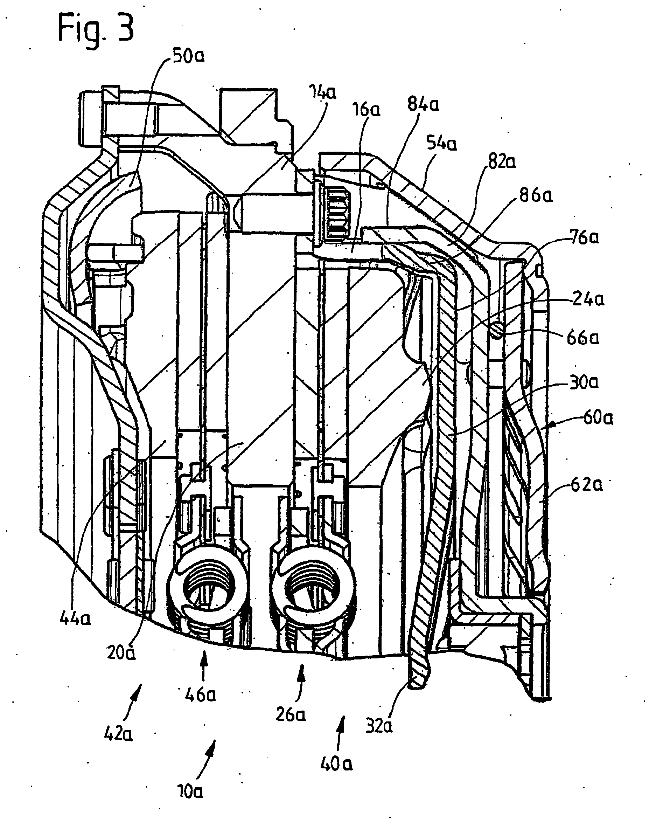

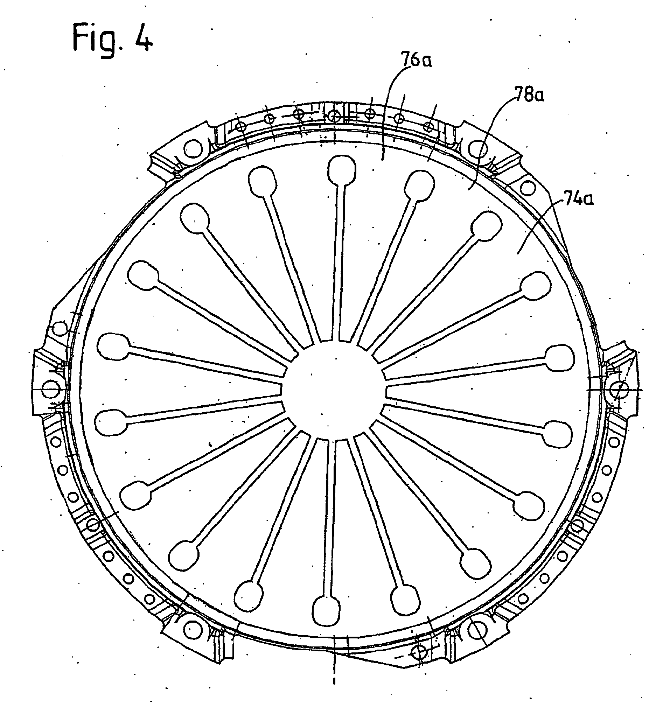

In den Figuren 3 und 4 ist eine alternative Ausgestaltungsform einer erfindungsgemäßen Kupplungsanordnung gezeigt. Komponenten, welche vorangehend beschriebenen Komponenten hinsichtlich Aufbau bzw. Funktion entsprechen, sind mit dem gleichen Bezugszeichen unter Hinzufügung eines Anhangs "a" bezeichnet. Es sei hier darauf hingewiesen, dass der grundsätzliche Aufbau der in den Figuren 3 und 4 gezeigten Doppelkupplungsanordnung 10a dem vorangehend mit Bezug auf die Figuren 1 und2 beschriebenen Aufbau entspricht, so dass auf die diesbezüglichen Ausführungen verwiesen werden kann.

Im Unterschied zu der vorangehend beschriebenen Ausgestaltungsform ist bei der in Fig. 3 gezeigten Ausgestaltungsform nunmehr die Einrückkraftübertragungshebelanordnung 30a des ersten Kupplungsbereichs 40a nicht als eigenständige Baugruppe bereitgestellt, sondern bauteilemäßig mit einem anderen Bauteil, nämlich dem Gehäuseteil 16a verschmolzen. Dieses ist wiederum topfartig ausgebildet und bildet nunmehr mit seinem Bodenbereich 76a die Einrückkraftübertragungshebelanordnung 30a. Wie man in Fig. 4 erkennt, schließen hier also die einzelnen Hebelabschnitte 32a radial außen an einen ringartigen Bereich 78a des Bodenbereichs 76a an, welcher ringartige Bereich 78a nunmehr wiederum einen Verbindungsbereich 74a für die einzelnen Hebelabschnitte 32a bildet. Die Hebelabschnitte 32a beaufschlagen die Anpressplatte 24a in ihrem radial mittleren oder weiter innen gelegenen Bereich direkt oder ggf. über eine Verschleißnachstellvorrichtung und sind in ihrem radial inneren Bereich 80a zur Beaufschlagung durch einen Einrückkraftübertragungsmechanismus ausgebildet.

Um auch die Einrückkraftübertragungshebelanordnung 60a des zweiten Kupplungsbereichs 42 reaktionskraftmäßig an einer axial feststehenden Baugruppe abstützen zu können, ist ein im Wesentlichen topfartig ausgebildetes Abstützgehäuse 82a vorgesehen. Dieses ist mit seinem Außenwandungsbereich 84a über den entsprechenden Außenwandungsbereich 86a des Gehäuseteils 16a geschoben und dort vorzugsweise unter Presspassung gehalten. An der Außenseite dieses Abstützgehäuses 82a stützt sich nunmehr der Drahtring 66a ab, welchen die Einrückkraftübertragungshebelanordnung 60a zur Reaktionskrafterzeugung beaufschlagt. Um hier eine stabile Verbindung zu erlangen, ist es neben dem bereits angesprochenen Pressverband auch möglich, die beiden Gehäuseteile 16a und 82a zu verschweißen, zu verschrauben, zu vernieten oder in sonstiger Weise form- bzw. materialschlüssig aneinander anzubinden.

Es sei hier darauf hingewiesen, dass es selbstverständlich möglich ist, die in den Figuren 1 und 3 gezeigten Ausgestaltungsformen zu kombinieren, also beide Einrückkraftübertragungshebelanordnungen integral auszubilden jeweils mit einem anderen Bauteil, nämlich dem Einrückkraftübertragungselement 54 der Fig. 1 einerseits und dem Gehäuseteil 16a der Fig. 3 andererseits.

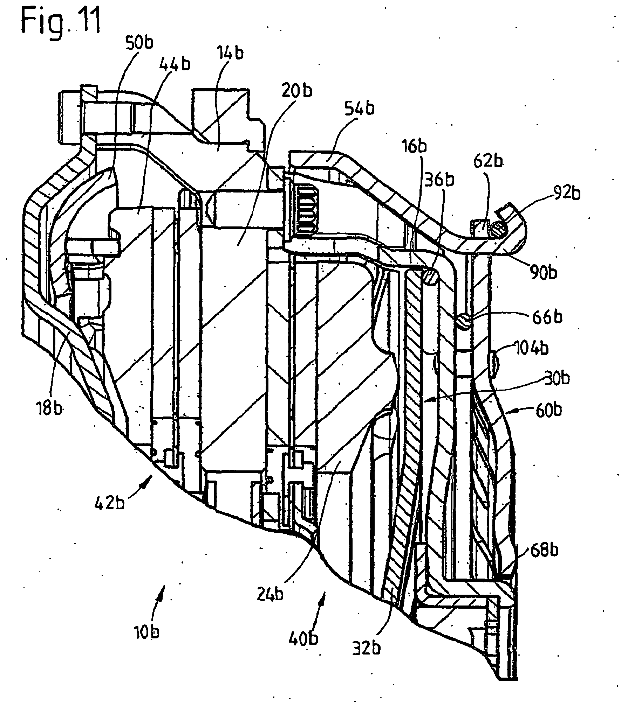

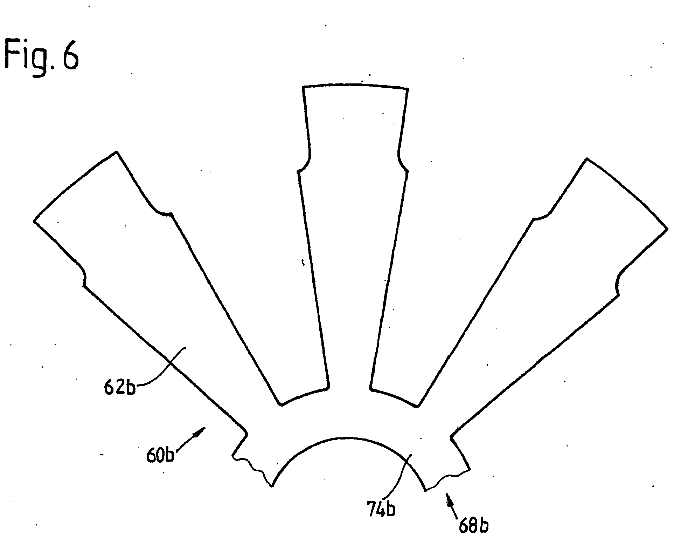

Die Figuren 5 bis 12 zeigen weitere Varianten erfindungsgemäßer Doppelkupplungen. Hier sind Komponenten, welche vorangehend beschriebenen Komponenten hinsichtlich Aufbau bzw. Funktion entsprechen, mit dem gleichen Bezugszeichen unter Hinzufügung eines Anhangs "b" bezeichnet. Auch bei diesen Ausgestaltungsformen ist der grundsätzliche Aufbau der Doppelkupplungsanordnung so wie vorangehend beschrieben.

Die Einrückkraftübertragungshebelanordnung 60b des zweiten Kupplungbereichs 42b umfasst hier eine Mehrzahl von Hebelabschnitten 62b, die nunmehr in ihrem radial inneren Bereich 68b durch einen ringartigen Verbindungsbereich 74b miteinander fest gekoppelt sind. Von dort erstrecken sich die in Umfangsabstand zueinander liegenden Hebelabschnitte 62b nach radial außen. Das Einrückkraftübertragungselement 54b weist in seinem axialen Endbereich eine Mehrzahl von zungenartig ausgebildeten Kopplungsabschnitten 90b auf, die so positioniert sind, dass sie in Umfangsrichtung zwischen jeweils zwei Hebelabschnitte 62b eingreifen. Es ergibt sich dann die in Fig. 5 erkennbare Konfiguration, bei welcher die Hebelabschnitte 62b und die Koppelabschnitte 90b sich gegenseitig übergreifen. Ein als Drahtring ausgebildeter Kopplungsring 92b liegt radial außerhalb der Kopplungsabschnitte 90b, so, dass er in radialer Richtung auch noch sich mit den radial äußeren Enden der Hebelabschnitte 62b überlappt und somit an diesen axial abgestützt ist. Die Kopplungsabschnitte 90b werden nach dem im Wesentlichen den letzten Arbeitsschrit beim Zusammenfügen der Kupplungsanordnung 10b darstellenden axialen Heranführen der Einrückkraftübertragungshebelanordnung 62b und dem ebenfalls axialen Heranführen des Kopplungsrings 92b nach radial außen verrollt bzw. umgebogen, so dass auf diese Art und Weise ein fester Kopplungszusammenhalt zwischen dem Einrückkraftübertragungselement 54b und der Einrückkraftübertragungshebelanordnung 60b erlangt wird. Durch dieses Umbiegen bzw. Verrollen der Kopplungsabschnitte 90b in ihren Endbereichen kann gleichzeitig auch exakt die Lage der Hebelabschnitte 62b im Einbauzustand eingestellt werden.

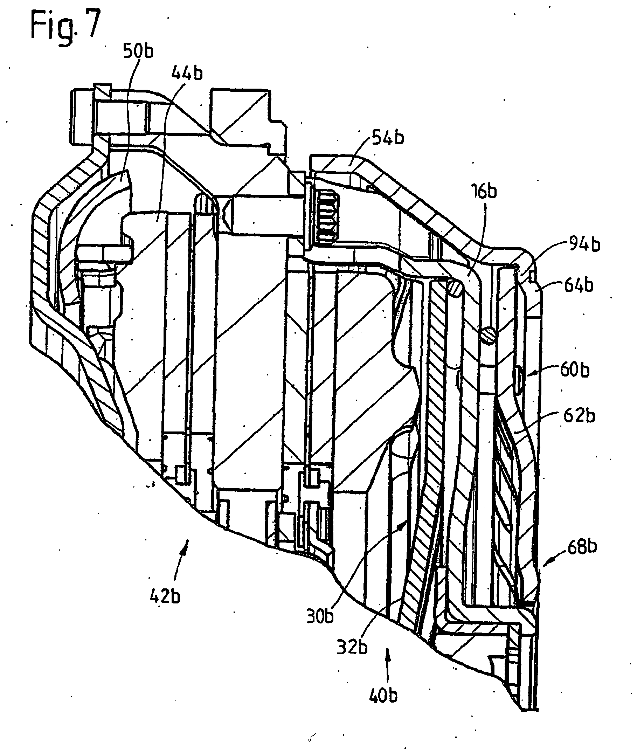

Bei der in Fig. 7 dargestellten Ausgestaltungsvariante stützten sich die Hebelabschnitte 62b der Einrückkraftübertragungshebelanordnung 60b in ihren radial äußeren Bereich über den ringartigen Bodenbereich 64b des wiederum im Wesentlichen topfartig ausgebildeten Einrückkraftübertragungselements 54b an diesem ab. Hier kann zur Abstützung der Hebelabschnitte 62b durch Materialumformung ein Abstützbereich 94b am Einrückkraftübertragungselement 54b bereitgestellt werden.

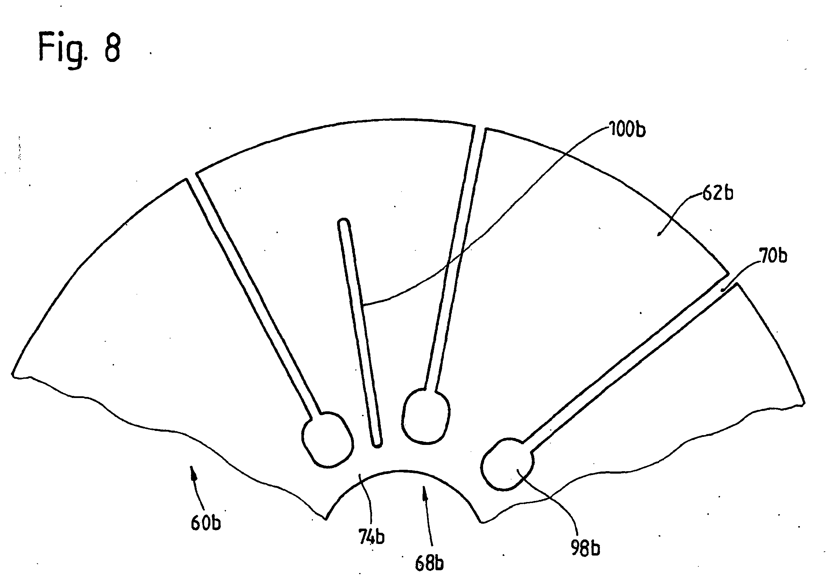

Mit Bezug auf die Figuren 8 bis 12 werden nachfolgend verschiedene Ausgestaltungsformen anhand einer Einrückkraftübertragungshebelanordnung 60b beschrieben, welche selbstverständlich auch bei den vorangehend beschriebenen Ausgestaltungsformen Anwendung finden können und welche überdies selbstverständlich auch Anwendung finden können bei der dem ersten Kupplungsbereich 40b zugeordneten Einrückkraftübertragungshebelanordnung 30b.

In Fig. 8 ist eine Einrückkraftübertragungshebelanordnung 60b gezeigt, welche im Wesentlichen ringscheibenartig ausgebildet ist und in Umfangsrichtung aufeinander folgend wieder die Hebelabschnitte 62b aufweist. Diese sind in ihrem radial inneren Bereich 68b wieder durch den ringartigen Verbindungsbereich 74b integral miteinander verbunden, wobei hier darauf hingewiesen sei, dass, ebenso wie bei den vorangehend beschriebenen Ausgestaltungsformen, diese Übertragungshebelanordnung 60b vorzugsweise durch Ausstanzen aus einem Blechrohling generiert wird. Durch Materialaussparungen 70b, welche in ihrem radial inneren, an den Verbindungsbereich 74b anschließenden Endbereich 98b erweitert sind, sind die einzelnen Hebelabschnitte 60b voneinander getrennt. Auf diese Art und Weise werden vor allem im Bereich der Anbindung an den Verbindungsbereich 74b die Hebelabschnitte 60b mit geringer Materialstärke bereitgestellt, was deren kräftemäßige Entkopplung unterstützt. Um gleichwohl aber die Hebelabschnitte 60b zur Einrückkraftübertragung ausreichend starr zu gestalten, können zumindest einige dieser in radialer Richtung verlaufende und beispielsweise durch Einprägung oder Umformung generierte rippenartige Vertiefungen bzw. Erhöhungen 100b aufweisen.

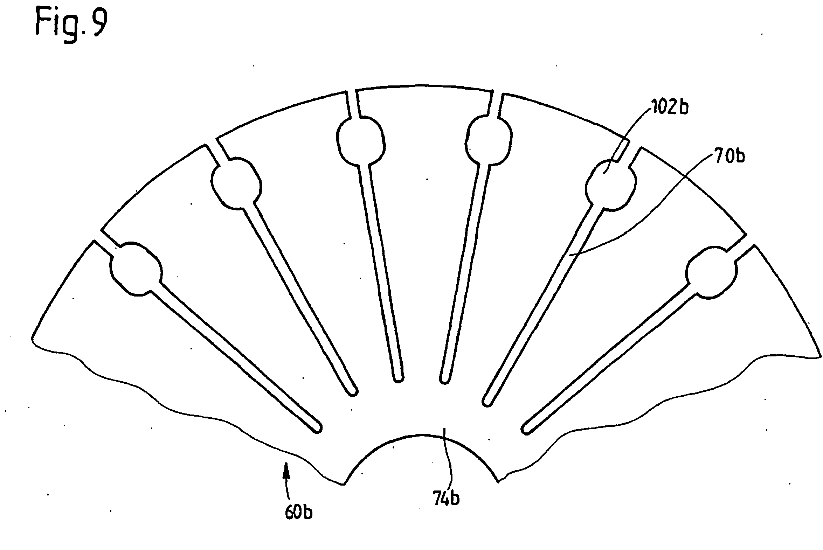

Bei der in Fig. 9 dargestellten Ausgestaltungsform einer Einrückkraftübertragungshebelanordnung 60b sind die Materialaussparungen 70b in einem radial weiter außen liegenden Bereich 102b erweitert, was insbesondere auch dazu vorteilhaft sein kann, die Einrückkraftübertragungshebelanordnung 60b durch in Fig. 5 beispielsweise erkennbare Bolzenelemente 104b am Gehäuse oder einem sonstigen Abstützelement festzulegen.

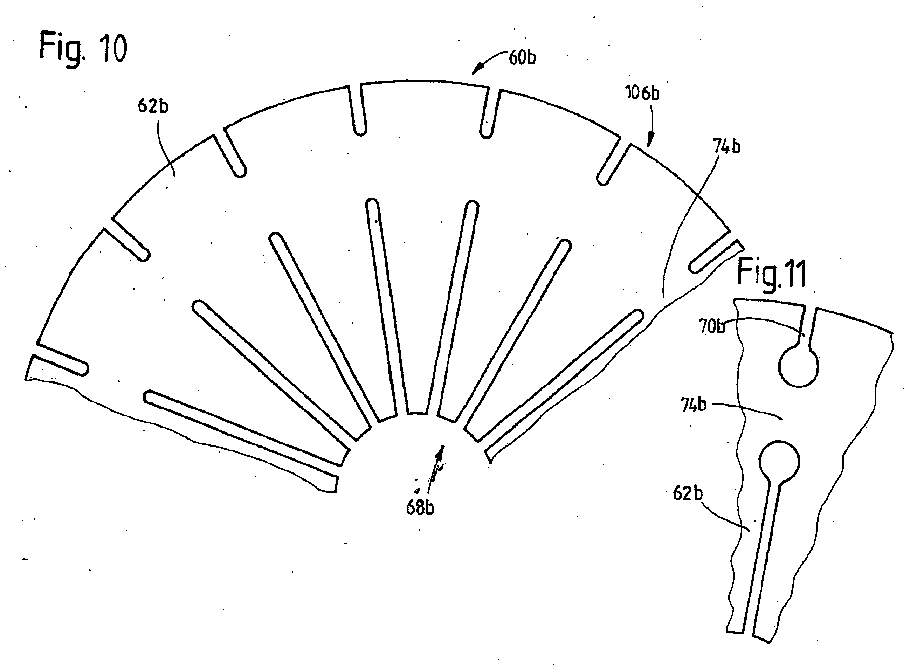

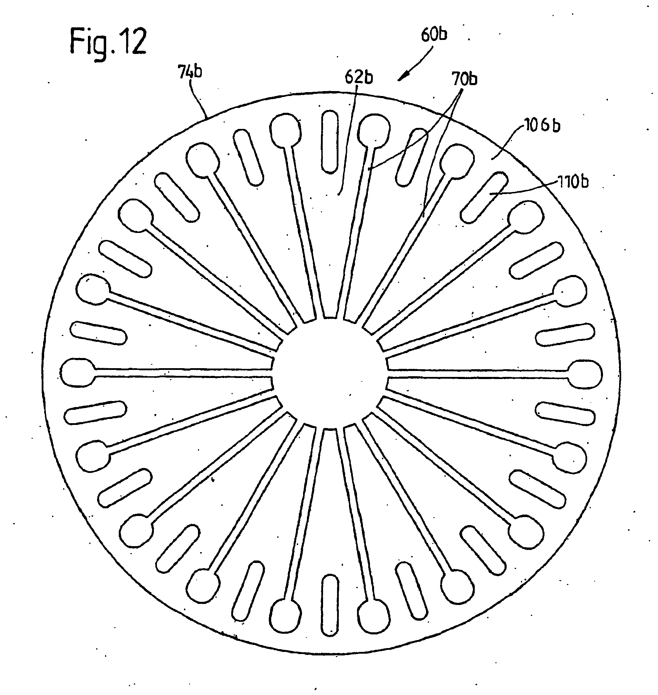

In Fig. 10 ist eine Ausgestaltungsform gezeigt, bei welcher die einzelnen Hebelabschnitte 62b der Einrückkraftübertragungshebelanordnung 60b nicht mehr im radial inneren Bereich, sondern in einem zwischen dem radial inneren Bereich 68b und dem radial äußeren Bereich 106b gelegenen Bereich durch einen ringartig umlaufenden Verbindungsbereich 74b, jeweils gebildet durch einzelne Verbindungsabschnitte zwischen den Hebelabschnitten 62b, verbunden sind. Dies kann gleichzeitig auch der Bereich sein, in welchem die Hebelabschnitte 60b beispielsweise bezüglich des Gehäuseteils 16b abgestützt sind, und welcher somit also im Wesentlichen den Schwenklagerbereich für die einzelnen Hebelabschnitte 62b bildet. Bei der in Fig. 11 dargestellten Abwandlung dieser Ausgestaltungsform sind die die einzelnen Hebelabschnitte 62b trenndenen Materialaussparungen 70b in ihren radial an den Verbindungsbereich 74b angrenzenden Endbereichen wieder erweitert ausgebildet, wodurch eine Einwirkung auf die Eigenkraftcharakteristik genommen werden kann. In Fig. 12 ist eine Ausgestaltungsform einer ringscheibenartig ausgebildeten Einrückkraftübertragungshebelanordnung 60b gezeigt, bei welcher nunmehr die einzelnen Hebelabschnitte 62b in ihrem radial äußeren Bereich 106b durch einen ringartig umlaufenden Verbindungsbereich 74b miteinander gekoppelt sind. Nahe diesem Verbindungsbereich 74b weisen die einzelnen Hebelabschnitte 62b jeweils im Wesentlichen zwischen zwei Materialaussparungen 70b, welche die Hebelabschnitte 62b trennen, sich erstreckende, langlochartige Aussparungen 110b auf. Durch diese Aussparungen 110b werden die einzelnen Hebelabschnitte 62b in ihrem Bereich der Anbindung an den Verbindungsbereich 74b aufgeteilt in einzelne Abschnittssegemente geringerer Umfangserstreckung, so dass hier eine weitere kraftmäßige Entkopplung der einzelnen Hebelabschnitte 62b voneinander erlangt werden kann.

Es sei darauf hingewiesen, dass selbstverständlich die spezielle Formgebung, der gegenseitige Umfangsabstand, im Wesentlichen definiert durch die angesprochenen Materialaussparungen 70b, sowie die radiale Erstreckungslänge der Hebelabschnitte 62b und die radiale Lage des Verbindungsbereichs 74b bezüglich der dargestellten Ausgestaltungsformen variiert werden können.

## Patentansprüche

1. Kupplungsanordnung, umfassend wenigstens eine in Richtung auf eine Widerlageranordnung (20) zu pressbare Anpressplatte (44) sowie eine Einrückkraftübertragungshebelanordnung (60), welche zur Übertragung einer Einrückkraft auf die Anpressplatte (44) beaufschlagbar ist und sich an einem Gehäuse (16) abstützt und eine Einrückkraft in ein Einrückkraftübertragungselement (54) einleitet,
**dadurch gekennzeichnet, dass** die Einrückkraftübertragunghebelanordnung (60) mit dem Einrückkraftübertragungselement (54) integral ausgebildet ist,

2. Kupplungsanordnung nach Anspruch 1,
**dadurch gekennzeichnet, dass** das EinrückkraftÜbertragungselement (54) topfartig ausgebildet ist und dass die Einrückkraflübertragungshebelanordnung (60) in einem Bodenbereich (58) des topfartigen Einrückkraftübertragungselements (54) ausgebildet ist.

3. Kupplungsanordnung nach Anspruch 1 oder 2,
**dadurch gekennzeichnet, dass** die Einrückkraftübertragung shebelanordnung (60) eine Mehrzahl von in Umfangsrichtung um eine Drehachse aufeinander folgenden und sich von einem ringartigen Bereich (64) des Einrückkraftübertragungselementes (54) nach radial innen erstreckenden Hebelabschnitten (62) umfasst,

4. Kupplungsanordnung, umfassend wenigstens eine in Richtung auf eine Widerlageranordnung (20a) zu pressbare Anpressplatte (24a), wobei die Anpressplatte (24a) in einem Gehäuse (16a) angeordnet ist und mit diesem im Wesentlichen drehfest und bezüglich diesem in Richtung einer Drehachse verlagerbar gekoppelt ist, eine Einrückkraftübertragungshebelanordnung (30a), welche die Anpressplatte (24a) zur Übertragung einer Einrückraft beaufschlagt und eine Reaktionskraft in das Gehäuse (16a) einleitet.
**dadurch gekennzeichnet, dass** die Einrückkraftübetiragungshebelanordnung (30a) mit dem Gehäuse (16a) integral ausgebildet ist.

5. Kupplungsanordnung nach Anspruch 4,
**dadurch gekennzeichnet, dass** das Gehäuse (16a) topfartig ausgebildet ist und dass die Einrückkraftübertragungshebelanordnung (30a) in einem Bodenbereich (76a) des topfartigen Gehäuses (16a) ausgebildet ist.

6. Kupplungsanordnung nach Anspruch 4 oder 5,
**dadurch gekennzeichnet, dass** die Einrückkraflübertragungshebelanordnung (30a) eine Mehrzahl von in Umfangsrichtung aufeinander folgenden und sich von einem ringartigen Bereich (78a) des Gehäuses (16a) nach radial innen erstreckenden Hebelabschnitten (32a) umfasst.

7. Kupplungsanordnung nach einem der Ansprüche 4 bis 5,
**dadurch gekennzeichnet, dass** mit dem Gehäuse (16a) ein topfartig ausgebildetes Abstützgehäuse (82a) vorzugsweise durch Presspasssitz verbunden ist, an welchem Abstützgehäuse (82a) eine weitere Einrückkraftübertragungshebelanordnung (60a) für eine weitere Anpressplatte (44a) reaktionskraftmäßig abgestützt ist.

8. Kupplungsanordnung, umfassend wenigstens eine in Richtung auf eine Widerlageranordnung (20b) zu pressbare Anpressplatte (24b, 44b) sowie eine Einrückkraftübertragungshebelanordnung (30b, 60b), welche zur Übertragung einer Einrückkraft auf die Anpressplatte (24b, 44b) beaufschlagbar ist und sich an einem Gehäuse (16b) abstützt und eine Einrückkraft in ein Einrückkraftübertragungselement (54b) oder eine Anpressplatte (24b) einleitet,
**dadurch gekennzeichnet,**
**dass** die Einrückkraftübertragungshebelanordnung (60b) ringartig ausgebildet ist und eine Mehrzahl von in Umfangsrichtung um eine Drehachse aufeinander folgenden und sich im Wesentlichen radial erstreckenden Hebelabschnitten (62b) umfasst, die in einem ringartigen Verbindungsbereich (74b) miteinander verbunden sind,
**dass** der Verbindungsbereich (74b) die Hebelabschnitte (62b) in ihrem radial mittleren Bereich verbindet, und
**dass** an wenigstens einem Hebelabschnitt (62b) eine sich näherungsweise in radialer Richtung erstreckende rippenartige Ausformung (100b) ausgebildet ist.

9. Kupplungsanordnung nach Anspruch 8,
**dadurch gekennzeichnet, dass** das Einrückkraftübertragungselement (54b) in Umfangsrichtung aufeinanderfolgende und jeweils zwischen zwei l lebelabschnitte (62b) der Emrückkraftübertragungshebelanordnung (60b) eingreifende Kopplungsabschnitte (90b) aufweist und dass die Hebelabschnitte (62b) und die Kopplungsabschnitte (90b) durch ein ringartiges Kopplungselement (92b) zur Kraftübertragung gekoppelt sind,

10. Kupplungsanordnung nach einem der Ansprüche 8 bis 9,
**dadurch gekennzeichnet, dass** die Hebelabschnitte (62b) in einem dem Verbindungsbereich (74b) nahen Bereich Materialaussparungen (98b) aufweisen.

11. Kupplungsanordnung nach einem der Ansprüche 8 bis 10,
**dadurch gekennzeichnet, dass** die Hebelabschnitte (62b) voneinander in Umfangsrichtung trennende Materialaussparungen (70b) in wenigstens einem radialen Bereich erweitert sind.

12. Kupplungsanordnung nach einem der Ansprüche 1 bis 11,
**dadurch gekennzeichnet, dass** die Kupplungsanordnung beidseits der Widerlageranordnung (20; 20a; 20b) jeweils eine Anpressplatte (24, 44; 24a, 44a; 24b, 44b) umfasst, dass eine erste Einrückkraftübertragungshebelanordnung (30; 30a; 30b) an einem Gehäuse (16; 16a; 16b) abgestützt ist und eine erste der Anpressplatten (24; 24a; 24b) in Richtung auf die Widerlageranordnung (20; 20a; 20b) zu beaufschlagt und dass eine zweite Einrückkraftübertragungshebelanordnung (60; 60a; 60b) eine Einrückkraft auf die zweite der Anpressplatten (44; 44a; 44b) über wenigstens ein Einrückkraftübertragungselement (54; 54a; 54b) überträgt.

## Claims

1. Clutch arrangement, comprising at least one pressure plate (44) which can be pressed in the direction of an abutting arrangement (20), and an engaging force transmission lever arrangement (60), which can be acted upon in order to transmit an engaging force to the pressure plate (44) and is supported on a housing (-16), and which introduces an engaging force into an engaging force transmission element (54),
**characterized in that** the engaging force transmission lever arrangement (60) is integrally formed with the engaging force transmission element (54).

2. Clutch arrangement according to Claim 1,
**characterized in that** the engaging force transmission element (54) is of canister-shaped design and that the engaging force transmission lever arrangement (60) is formed in a base area (58) of the canister-like engaging force transmission element (54).

3. Clutch arrangement according to Claim 1 or 2,
**characterized in that** the engaging force transmission lever arrangement (60) comprises a plurality of lever sections (62) circumferentially succeeding one another about an axis of rotation and extending radially inwards from an annular area (64) of the engaging force transmission element (54).

4. Clutch arrangement comprising at least one pressure plate (24a) capable of being pressed in the direction of an abutting arrangement (20a), the pressure plate (24a) being arranged in a housing (16a) and being coupled thereto so that it is substantially rotationally locked and displaceable in relation to said housing in the direction of an axis of rotation, and an engaging force transmission lever arrangement (30a), which acts upon the pressure plate (24a) in order to transmit an engaging force and introduces a reaction force into the housing (16a),
**characterized in that** the engaging force transmission lever arrangement (30a) is integrally formed with the housing (16a).

5. Clutch arrangement according to Claim 4,
**characterized in that** the housing (16a) is of canister -shaped design and that the engaging force transmission lever arrangement (30a) is formed in a base area (76a) of the canister-like housing (16a).

6. Clutch arrangement according to Claim 4 or 5,
**characterized in that** the engaging force transmission lever arrangement (30a) comprises a plurality of lever sections (32a) succeeding one another in a circumferential direction and extending radially inwards from an annular area (78a) of the housing (16a).

7. Clutch arrangement according to any one of Claims 4 to 5,
**characterized in that** a canister-like support housing (82a) is connected to the housing (16a), preferably by a press-fit seating, against which support housing (82a) a further engaging force transmission lever arrangement (60a) for a further pressure plate (44a) is supported in respect of the reaction force.

8. Clutch arrangement comprising at least one pressure plate (24b, 44b) which can be pressed in the direction of an abutting arrangement (20b), and an engaging force transmission lever arrangement (30b, 60b), which can be acted upon in order to transmit an engaging force to the pressure plate (24b, 44b) and is supported on a housing (16b), and which introduces an engaging force into an engaging force transmission element (54b) or a pressure plate (24b),
**characterized in**
**that** the engaging force transmission lever arrangement (60b) is of annular design and comprises a plurality of lever sections (62b) succeeding one another in a circumferential direction about an axis of rotation and essentially extending radially, which are interconnected in a connecting area (74b) of annular design,
**that** the connecting area (74b) connects the lever sections (62b) in their radially middle area, and
**that** a rib-like formation (100b) extending approximately in a radial
direction is formed on at least one lever section (62b).

9. Clutch arrangement according to Claim 8,
**characterized in that** the engaging force transmission element (54b) has coupling sections (90b) succeeding one another in a circumferential direction and engaging between each two lever sections (62b) of the engaging force transmission lever arrangement (60b), and that for transmitting force the lever sections (62b) and the coupling sections (90b) are coupled by an annular coupling element (92b).

10. Clutch arrangement according to any one of Claims 8 to 9,
**characterized in that** the lever sections (62b) have material recesses (98b) in an area close to the connecting area (74b).

11. Clutch arrangement according to any one of Claims 8 to 10,
**characterized in that** the material recesses (70b) separating the lever sections (62b) from one another in a circumferential direction are widened in at least one radial area.

12. Clutch arrangement according to any one of Claims 1 to 11,
**characterized in that** the clutch arrangement comprises one pressure plate (24, 44; 24a, 44a; 24b, 44b) on either side respectively of the abutting arrangement (20; 20a; 20b), that a first engaging force transmission lever arrangement (30; 30a; 30b) is supported on a housing (16; 16a; 16b) and acts upon a first pressure plate (24; 24a; 24b) in the direction of the abutting arrangement (20; 20a; 20b) and that a second engaging force transmission lever arrangement (60; 60a; 60b) transmits an engaging force to the second pressure plate (44; 44a; 44b) by way of at least one engaging force transmission element (54; 54a; 54b).

## Revendications

1. Dispositif d'embrayage, comportant au moins une plaque de compression (44) pouvant être comprimée en direction d'un dispositif de contre-palier (20) ainsi qu'un dispositif à levier de transmission de force d'embrayage (60) qui peut être poussé vers la plaque de compression (44) pour transmettre une force d'embrayage et s'appuie sur un boîtier (16) et introduit une force d'embrayage dans un élément de transmission de force d'embrayage (54),
**caractérisé en ce que** le dispositif à levier de transmission de force d'embrayage (60) forme partie intégrante avec l'élément de transmission de force d'embrayage (54).

2. Dispositif d'embrayage selon la revendication 1,
**caractérisé en ce que** l'élément de transmission de force d'embrayage (54) est réalisé en forme de coupelle et que le dispositif à levier de transmission de force d'embrayage (60) est réalisé dans une zone de fond (58) de l'élément de transmission de force d'embrayage (54) en forme de coupelle.

3. Dispositif d'embrayage selon la revendication 1 ou 2,
**caractérisé en ce que** le dispositif à levier de transmission de force d'embrayage (60) comporte une pluralité de sections de levier (62) se succédant dans le sens circonférentiel autour d'un axe de rotation et s'étendant depuis une zone de forme annulaire (64) de l'élément de transmission de force d'embrayage (54) dans un sens radial vers l'intérieur.

4. Dispositif d'embrayage, comportant au moins une plaque de compression (24a) pouvant être comprimée en direction d'un dispositif de contrepalier (20a), la plaque de compression (24a) étant disposée dans un boîtier (16a) et étant couplée à celui-ci sensiblement de manière fixe en rotation et avec une possibilité de décalage par rapport à celui-ci en direction d'un axe de rotation, un dispositif à levier de transmission de force d'embrayage (30a) qui pousse la plaque de compression (24a) pour transmettre une force d'embrayage et introduit une force de réaction dans le boîtier (16a),
**caractérisé en ce que** le dispositif à levier de transmission de force d'embrayage (30a) forme partie intégrante avec le boîtier (16a).

5. Dispositif d'embrayage selon la revendication 4,
**caractérisé en ce que** le boîtier (16a) est réalisé en forme de coupelle et que le dispositif à levier de transmission de force d'embrayage (30a) est réalisé dans une zone de fond (76a) du boîtier en forme de coupelle (16a).

6. Dispositif d'embrayage selon la revendication 4 ou 5,
**caractérisé en ce que** le dispositif à levier de transmission de force d'embrayage (30a) comporte une pluralité de sections de levier (32a) se succédant dans le sens circonférentiel et s'étendant depuis une zone de forme annulaire (78a) du boîtier (16a) dans un sens radial vers l'intérieur.

7. Dispositif d'embrayage selon l'une quelconque des revendications 4 à 5,
**caractérisé en ce qu'**au boîtier (16a) est relié, de préférence par ajustage à la presse, un boîtier d'appui (82a) réalisé en forme de coupelle, sur lequel boîtier d'appui (82a) s'appuie par force de réaction un autre dispositif à levier de transmission de force d'embrayage (60a) pour une autre plaque de compression (44a).

8. Dispositif d'embrayage, comportant au moins une plaque de compression (24b, 44b) pouvant être comprimée en direction d'un dispositive de contre-palier (20b) ainsi qu'un dispositif à levier de transmission de force d'embrayage (30b, 60b) qui peut être poussé pour transmettre une force d'embrayage vers la plaque de compression (24b, 44b) et s'appuie sur un boîtier (16b) et introduit une force d'embrayage dans un élément de transmission de force d'embrayage (54b) ou une plaque de compression (24b),
**caractérisé en**
**ce que** le dispositif à levier de transmission de force d'embrayage (60b) est réalisé en forme annulaire et comprend une pluralité de sections de levier (62b) se succédant dans le sens circonférentiel autour d'un axe de rotation et s'étendant sensiblement dans un sens radial, qui sont reliées entre elles dans une zone de connexion (74b) en forme annulaire,
ce que la zone de connexion (74b) relie les sections de levier (62b) dans leur partie radialement médiane, et
ce que sur au moins une section de levier (62b) est réalisée une proéminence en forme de nervure (100b) s'étendant approximativement dans le sens radial.

9. Dispositif d'embrayage selon la revendication 8,
**caractérisé en ce que** l'élément de transmission de force d'embrayage (54b) comporte des sections de couplage (90b) se succédant dans le sens circonférentiel et s'engrenant respectivement entre deux sections de levier (62b) du dispositif à levier de transmission de force d'embrayage (60b) et que les sections de levier (62b) et les sections de couplage (90b) sont couplées par un élément de couplage de forme annulaire (92b) pour la transmission de force.

10. Dispositif d'embrayage selon l'une quelconque des revendications 8 à 9,
**caractérisé en ce que** les sections de levier (62b) comportent, dans une zone proche de la zone de connexion (74b), des évidements de matière (98b).

11. Dispositif d'embrayage selon l'une quelconque des revendications 8 à 10,
**caractérisé en ce que** les évidements de matière (70b) séparant les unes des autres les sections de levier (62b) dans le sens circonférentiel sont élargis dans au moins une zone radiale.

12. Dispositif d'embrayage selon l'une quelconque des revendications 1 à 11,
**caractérisé en ce que** le dispositif d'embrayage comporte respectivement, des deux côtés du dispositif de contre-palier (20 ; 20a ; 20b), une plaque de compression (24, 44 ; 24a, 44a ; 24b, 44b), qu'un premier dispositif à levier de transmission de force d'embrayage (30 ; 30a ; 30b) s'appuie sur un boîtier (16 ; 16a ; 16b) et pousse la première des plaques de compression (24 ; 24a ; 24b) en direction du dispositif de contre-palier (20 ; 20a ; 20b) et qu'un deuxième dispositif à levier de transmission de force d'embrayage (60 ; 60a ; 60b) transmet une force d'embrayage à la deuxième des plaques de compression (44 ; 44a ; 44b) par l'intermédiaire d'au moins un élément de transmission de force d'embrayage (54; 54a ; 54b).
